# EUROPEAN PATENT SPECIFICATION

(11) **EP 2 911 908 B1**
(45) Date of publication and mention of the grant of the patent: **31.08.2016**
(21) Application number: 13783892.6
(22) Date of filing: 25.10.2013
(51) Int. Cl.: B60L 9/00, B60L 15/00, B60L 13/00, B60L 9/12, B60L 9/28, B60L 9/30, B60L 15/32, B60L 1/00

(54) **POWER DISTRIBUTION SYSTEM FOR RAILBOUND VEHICLES USING POWER ELECTRONIC TRACTION CONVERTER UNITS AND A SWITCHING MODULE**
ENERGIEVERTEILUNGSSYSTEM FÜR SCHIENENFAHRZEUGE MIT LEISTUNGSELEKTRONISCHEN ANTRIEBSUMRICHTEREINHEITEN UND SCHALTMODUL
SYSTÈME DE DISTRIBUTION DE PUISSANCE POUR VÉHICULES SUR RAILS UTILISANT DES UNITÉS DE CONVERSION DE TRACTION ÉLECTRONIQUE DE PUISSANCE ET UN MODULE DE COMMUTATION

(30) Priority: 26.10.2012 EP 12190195
(43) Date of publication of application: 02.09.2015
(73) Proprietor: ABB Schweiz AG, 5400 Baden (CH)
(72) Inventor: VETTERLI, Christian, CH-1470 Estavayer-le-lac (CH); STEFANUTTI, Philippe, F-74330 Choisy (FR); CHAUDHURI, Toufann, CH-1110 Morges (CH)
(74) Representative: ABB Patent Attorneys
(86) International application number: PCT/EP2013/072405
(87) International publication number: WO 2014/072189

(56) References cited:
- EP-A1- 1 288 060
- DE-A1-102008 014 571
- DE-A1-102010 044 322
- DE-C1- 19 712 564

## Description

### Technical field

The present invention relates to power distribution system in railbound vehicles, such as trains, using a power electronic traction converter unit for converting an AC catenary power to a DC power to be distributed through a common DC distribution bus.

### Related art

Power distribution systems for railbound vehicles are well known in the art. Recently, bulky transformers have been replaced by power electronic traction converter units converting received AC power into DC power on a common DC distribution bus or backbone extending through the cars of the vehicle.

There are cases where the power distribution for the vehicle shall be made adaptable to AC and DC catenary power, so that a switching functionality has to be included between the pantograph for tapping the catenary and the power electronic traction converter unit. Furthermore, some additional filtering and other elements are required at the input side of the train power distribution system.

Document DE 10 2010 039 699 discloses a drive system for a rail vehicle having two partial power converter systems equipped with network-side or mains-side feed systems. A load-side self-commutated converter is equipped with an output-side three-phase motor. The converter system comprises a medium-frequency transformer. As power input a single AC catenary voltage is provided.
Document DE 10 2010 039 697 A1 discloses a multi-system traction power converter for use in a railbound vehicle comprising a pantograph for receiving AC power and a pantograph for receiving DC power via separate catenary lines. The AC supply may be coupled via an AC/DC converter to a load converter while the DC supply line may be directly coupled to the load converter selectively by respective switches.

Document RU 234 8545 C1 discloses a traction motor for a multi-system electric locomotive. The multi-system electric locomotive can be powered from a DC and an AC supply voltage, wherein if AC power is received it is converted via an input converter to DC power to be supplied to a load converter.
Document DE 102 010 044 322 A1 discloses a multi-system power distribution system with a power electronic traction converter unit for use in a railbound vehicle comprising a pantograph for receiving AC and DC power. Depending on the received AC or DC power different inductivities for filtering in the respective power path are connected to the current collector.

It is an object of the present invention to provide power distribution system with a compact switching module for use in railbound vehicles which is adapted to use with a power electronic traction converter unit and a DC distribution bus, wherein the switching module is configured to make the power distribution system flexible for AC and DC input power supplies.

### Summary of the invention

This object is achieved by the power distribution system for a railbound vehicle according to claim 1 and the railbound vehicle according to the further independent claim.
Further embodiments of the present invention are indicated in the dependent subclaims.
According to a first aspect, it is provided a power distribution system for a railbound vehicle, comprising:
- a switching module,
- a DC distribution bus included in a DC power path and
- a power electronic traction converter unit for receiving AC power via the one or more AC power paths which is configured to convert the received AC power to DC power which is applied to the DC distribution bus, wherein the switching module comprising:
- an input terminal for receiving power from an external power supply;
- reconfiguration switches configured either to direct DC power of the external power supply received via the input terminal to the DC power path or to direct AC power received via the input terminal of the external power supply to a respective one of one or more AC power paths; and
- an adaptation element for providing AC and DC filtering of the power received via the input terminal.

One idea of the present invention is to provide the power distribution system with a compact switching module for use with a power electronic traction converter unit which electronically converts AC power to DC power to provide to a DC power path, such as to a common DC distribution bus. The switching module is configured to selectively forward AC catenary power via an AC power path, e. g. to the power electronic traction converter unit , and DC catenary power directly to the DC distribution bus.

Furthermore, using the adaptation element, all filter elements for supplied AC or DC power are included in the switching module, so that no further components have to be included between the catenary power supply, the DC distribution bus and the power electronic traction converter unit. Hence, the switching module represents a compact module to be installed on trains having a DC distribution bus and a power electronic traction converter unit and allows for adapting a train power distribution system to be powered with different kinds (AC or DC) of power supplies.

It may be provided that the adaptation element includes a plurality of chokes each providing an inductivity, wherein the input terminal is connected to an AC/DC choke and an AC choke in series, wherein a node between the AC/DC choke and the AC choke is connectable to the DC power path via a respective one of the reconfiguration switches.

Furthermore, the AC choke may be configured to be tapped depending on an AC input voltage level of the received power.

According to an embodiment, an autotransformer may be serially coupled to the AC/DC choke, wherein the autotransformer is further configured to automatically transform at least two received AC power voltages into an AC voltage to be applied to the respective AC power path via a respective one of the reconfiguration switches.

Moreover, a control choke may be provided in series for each of the one or more AC power paths.

At least one of the AC/DC choke and the AC choke may be provided as a split choke.

It may be provided that at least one of the following components are included in the switching module between the external power source and the input terminal:
- an earthing switch coupled to the input terminal;
- a surge arrester coupled to the input terminal;
- a circuit breaker serially coupled to the input terminal; and
- a voltage and/or a current sensor coupled to the input terminal;
wherein a pre-charging unit is included in at least one of the DC or AC power paths.

According to an embodiment, the switching module is fully housed in a housing.
According to a further aspect, the power distribution system of a railbound vehicle is provided, wherein the power electronic traction converter unit comprises a AC/AC converter system, a AC/DC converter system, and a medium-frequency transformer device.

Furthermore, a plurality of power electronic traction converter units is provided for selectively receiving AC power via a respective AC power path, wherein the switching module is configured to select the AC power path and the power electronic traction transformer according to the voltage level of the received power.

According to a further aspect, a railbound vehicle is provided comprising the above power distribution system.

### Brief description of the drawings

Preferred embodiments of the present invention are described in more detail in the following description in conjunction with the accompanying drawings, in which:
- Figure 1: schematically shows a train power distribution system using a switching module connected to a power electronic traction unit and to a DC distribution bus;
- Figure 2: shows a schematic view on the switching module as used in the train power distribution system of Figure 1;
- Figures 3a and 3b: show a more detailed view on an adaptation element in the switching module of Figure 2 for coupling with one power electronic traction unit;
- Figure 4: schematically shows a train power distribution system using a switching module connected to two power electronic traction converter units and to a DC distribution bus;
- Figure 5: shows another configuration of the switching module for use in the train power distribution system of Figure 3;
- Figure 6a und 6b: show a more detailed view on an adaptation element in the switching module for coupling with two power electronic traction converter units ;
- Figure 7: shows an alternative for implementation of the AC/DC choke and the AC choke in one of the adaption elements of Figures 3a, 3b, 6a, and 6b; and
- Figure 8: shows a schematic view on a configuration of a switching module with additional components and
- Figure 9: shows a schematic view on a power electronic traction converter unit with its main components.

### Description of embodiments

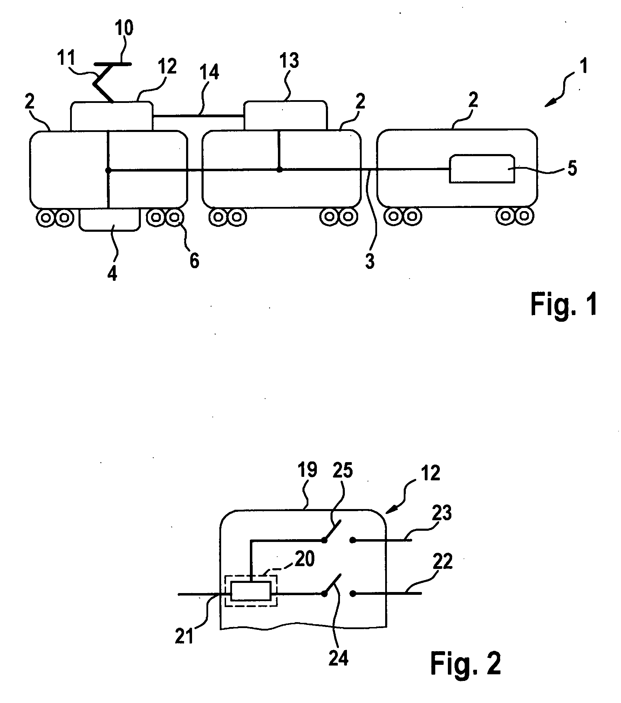

Figure 1 schematically shows an example of a railbound vehicle, such as a train 1 having a plurality of cars 2.

Power is distributed through the cars 2 via a common DC distribution bus 3 acting as an internal power supply backbone. The DC power distributed by the DC distribution bus 3 (DC power path) is supplied to loads, such as a load converter 4 and/or an auxiliary inverter 5. The load converter 4 receives the DC power and may be configured to convert the DC power to a three-phase AC power or any other form of electrical power to be supplied to traction motors 6. The auxiliary inverter 5 may be configured to receive the DC power and convert it to common low-voltage AC power for operating auxiliary devices.

Electric input power is transferred to the train 1 via a catenary 10 which is contacted by a pantograph 11. The thus received electrical input power is fed to a switching module 12 which is both directly connected to a power electronic traction converter unit 13 (AC power path) and directly connected to the DC distribution bus 3.

The switching module 12 is housed in a common housing 19 and is configured such that depending on the kind of electrical power provided, such as DC power or single phase AC power, the switching module 12 feeds the DC power directly to the DC distribution bus 3 or to the power electronic traction converter unit 13 via an AC link 14.
The power electronic traction converter unit 13 is an electronic converter on the mains-side or net-side and using active semiconductor components to provide a conversion between AC power and DC power without the use of bulky low-frequency transformers. The power electronic traction converter unit 13 is also known as net-frequent or low-frequency transformer-less converter unit on the mains-side and also sometimes named as power electronic traction transformer.

In the embodiment as shown in Figure 1, the switching module 12 and the power electronic traction converter unit 13 are each mounted on one of the cars 2, while the DC distribution bus 3 extends over all cars of the train 2. In other embodiments, the switching module 12 and the power electronic traction converter unit 13 can both be mounted on one car 2.

The switching module 12 is shown in more detail in the schematic of Figure 2. The switching module 12 has an adaptation element 20 which serves to provide functionalities to forward electrical power to either the DC distribution bus 3 via first terminal or to a respective power electronic traction converter unit 13.

An input terminal 21 of the switching module 12 is provided which is coupled to the adaptation element 20. The switching module 12 further provides an AC output terminal 22 for coupling via the AC link 14 to the power electronic traction converter unit 13 and a DC output terminal 23 for direct coupling to the DC distribution bus 3.

The adaptation element 20 is connected to receive the input power supplied by the catenary 10 and tapped by the pantograph 11. Basically, the adaptation element 20 provides either AC power via a first reconfiguration switch 24 to the AC link 14 or DC power via a second reconfiguration switch 25 to the DC distribution bus 3.

Furthermore, the adaptation element 20 provides an AC or DC filtering for the input power received by means of chokes having a predetermined inductance.

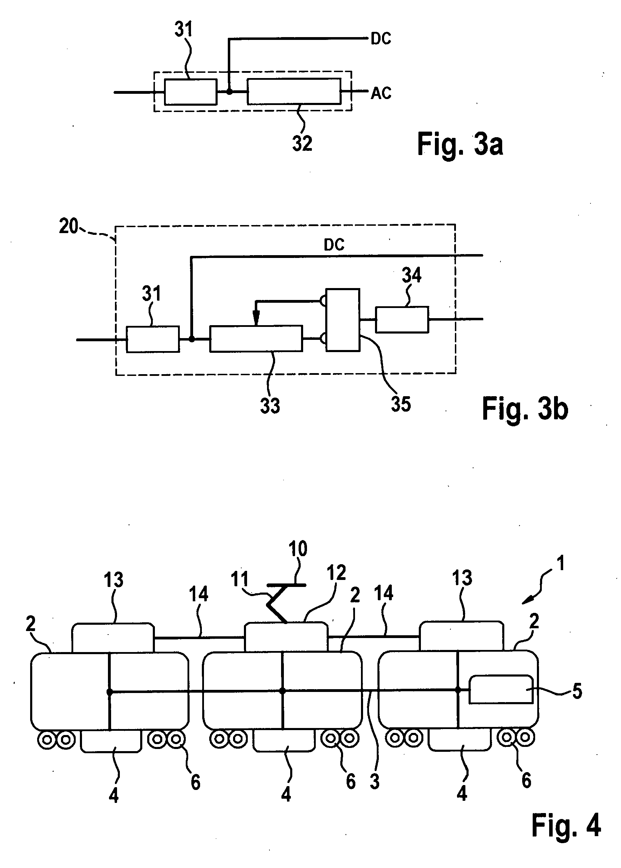

In Figure 3a, an adaption element 20 according to an embodiment is shown. The adaption element 20 has an AC/DC choke 31 and a first AC choke 32 connected in series, so that the serial connection of the AC/DC choke 31 and the first AC choke 32 couples the input terminal 21 via the first reconfiguration switch 24 to the AC link 14. The node between the AC/DC choke 31 and the first AC choke 32 is coupled via the second reconfiguration switch 25 to the DC distribution bus 3. Chokes, as understood herein, are inductances serving for DC and AC input filtering.

In Figure 3b, another embodiment of the adaptation element 20 is shown. In contrast to the adaptation element 20 of Figure 3a, the adaptation element 20 of Figure 3b is made capable of transmitting different supplied AC input power voltages to the power electronic traction converter unit 13. Instead of a first AC choke 32, an autotransformer 33 may be provided having two or more taps. The autotransformer 35 serves to transform the supplied AC power of different voltage levels to an AC voltage level appropriate for the input of the power electronic traction converter unit 13 connected. This configuration is useful if only one power electronic traction converter unit 13 is available and hence provides an improved AC voltage adaptation functionality. So the autotransformer 33 is tapped depending on a detected AC voltage on the catenary line 10 to provide the same output voltage of the switching module independent of the supplied input voltage.

A tap changer 35 is connected in series with taps of the autotransformer 33 so as to select the respective output of the autotransformer 33 depending on the supplied AC input voltage, i.e. to receive the input AC power from a first tap or a second tap, depending on the voltage the autotransformer 33 is supplied with.

In series to the autotransformer 33 and the tap changer 35, a control choke 34, which is used by the power electronic traction converter unit 13 for including a current measurement for current control, may be connected between an output of the autotransformer 35 and the AC output terminal 22.

As shown in the train configuration of Figure 4, the switching module 12 can also be connected to two power electronic traction converter units 13, wherein the switching module 12 is configured to direct AC power to one or two of the power electronic traction converter units 13 depending on the voltage level of the received AC power.

In case of the embodiment of Figure 4, the two of the power electronic traction converter units 13 may be connected to form either a series connection or a parallel connection. The selection of the series connection or the parallel connection may be made depending on the level of received AC power. In case of a switching module 12 according to Figure 3b a combination of switches can be provided. The combination of switches are controlled to couple in one switching state the two power electronic traction converter units 13 in series with the output of the control choke 34 in case of a high level of the received AC power. The combination of switches are controlled to couple in a second switching state the two power electronic traction converter units 13 in parallel with the output of the control choke 34 in case of a lower level of the received AC power.

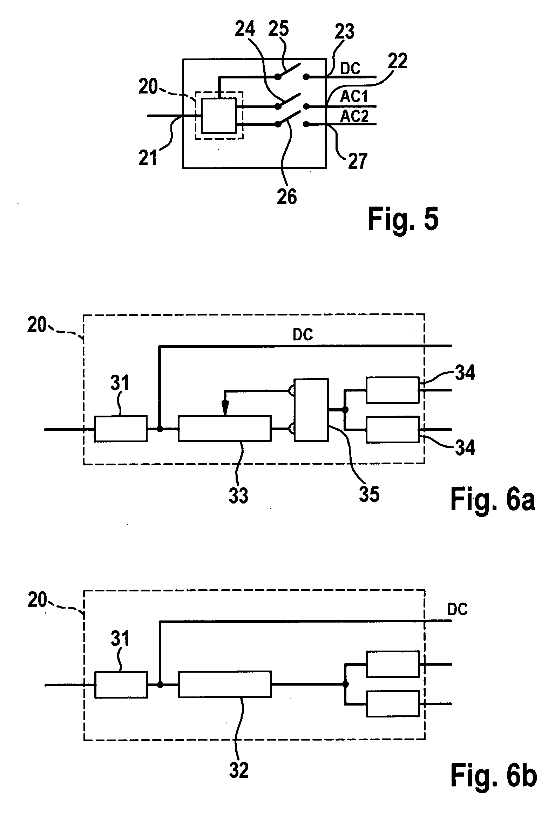

In Figure 5, a further embodiment of the switching module 12 is shown, which has, in addition to the embodiment as shown in Figure 2, an additional second reconfiguration switch 26 coupling a respective second AC output of the adaptation element 20 to a second AC output terminal 27. The first and second AC output terminals 22 and 27 serve to provide AC power via different AC links 14 to different non-coupled power electronic traction converter units 13 configured to operate at different input AC voltages.

According to Figure 6a, the adaptation element 20 as used in the switching module 12 of Figure 5 may comprise the AC/DC choke 31, the serially connected autotransformer 33, the tap changer 35 and two control chokes 34 in series with the autotransformer 33 and the tap changer 35 and for connection to the two power electronic traction converter units 13. The two power electronic traction converter units 13 may be connected in parallel.

According to Figure 6b, in contrast to the embodiment of Figure 6a, the first AC choke 32 is used instead of the autotransformer 33, so that no taps are provided for different AC input voltages. Further, the tap changer 35 is omitted and the received AC input power is forwarded via the first or second reconfiguration switches 24, 26 to the respective AC link 14. The first or second reconfiguration switches 24, 26 are switched depending on the output power requirements.

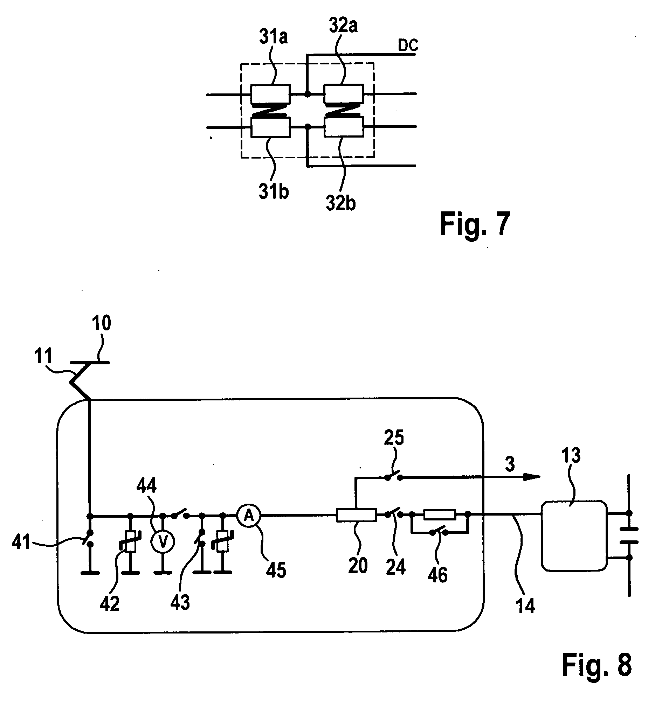

In Figure 7, an alternative configuration of the series connection of the AC/DC choke 31 and the first AC choke 32 is shown. Both chokes 31, 32 are formed as split inductivities which are magnetically coupled and arranged in the supply power path originating from the catenary 10 and a ground path originating from a ground rail.

A first AC/DC choke part 31 a is provided having a choke in the supply power path and a second AC/DC choke part 31 b is provided having a choke in the ground path, wherein both choke parts 31 a, 31 b are magnetically coupled. A first AC choke part 32a is provided having a choke in the supply power path and a second AC choke part 31 b is provided having a choke in the ground path, wherein both choke parts 32a, 32b are magnetically coupled. The first AC/DC choke part 31 a and the first AC choke part 32a are serially connected and the second AC/DC choke part 31 b and the second AC choke part 32b are serially connected. These split chokes are advantageous for common mode suppression. Of course, it may be provided that only one of the AC/DC choke part 31 a, 31 b and the AC choke parts 32a, 32b are magnetically coupled.

In Figure 8, the switching module 12 is shown having further components, such as earthing switches 41, surge arresters 42, breakers 43, voltage and current measurement units 44, 45 and pre-charging units 46, which can optionally be provided in the switching module 12.

According to another embodiment, there may be provided a system with a switching module 12 and two power electronic traction converter units 13, each serving a separate DC distribution bus 3. In that case the switching module 12 may have a second DC switch for coupling a DC power, if received, to a second DC distribution bus 3 and two AC switches, each associated to one respective power electronic traction converter unit 13.

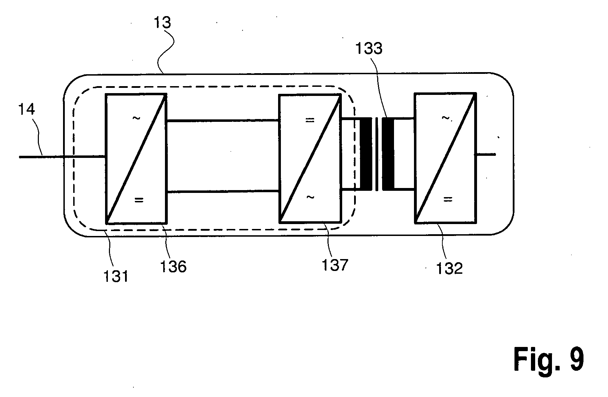

In Figure 9, the power electronic traction converter unit 13 comprises an AC/AC converter system 131, a medium-frequency transformer device 133 and a AC/DC converter system 132. The output of the AC/AC converter system 131 is linked by means of the medium-frequency transformer device 133 to the input of the AC/DC converter system 132. The AC/AC converter system 131 on the mains-side or net-side typically having a 4 quadrant converter 136 connected to the AC link 14 and a first resonant converter 137 connected to the input-side of the transformer 133. The first resonant converter 137 is on DC-side electrically connected to the DC side of the 4 quadrant converter 136. The AC/DC converter system 132 on the secondary-side of the medium-frequency transformer 133 can be for example performed as a second resonant converter and being on AC-side electrically connected to the secondary side of the medium-frequency transformer 133. This second resonant converter is on DC-side electrically connected over the common DC distribution bus 3 to the load converter 4.

### Reference list

- 1: train
- 2: cars
- 3: DC distribution bus
- 4: load converter
- 5: auxiliary inverter
- 6: traction motors, load
- 10: catenary
- 11: pantograph
- 12: switching module
- 13: power electronic traction converter unit
- 14: AC link
- 19: housing
- 20: adaptation element
- 22: AC output terminal
- 23: DC output terminal
- 24: first reconfiguration switch
- 25: second reconfiguration switch
- 27: second AC output terminal
- 31: AC/DC choke
- 32: first AC choke
- 31a, 31b: AC/DC choke parts
- 32a, 32b: AC choke parts
- 33: autotransformer
- 34: control choke
- 35: tap changer
- 41: earthing switch
- 42: surge arrester
- 43: circuit breaker
- 44, 45: voltage and current measurement units
- 46: pre-charging unit
- 131: AC/AC converter system
- 132: AC/DC converter system
- 133: medium-frequency transformer
- 136: 4 quadrant converter
- 137: first resonant converter

## Claims

1. Power distribution system for a railbound vehicle, comprising:
- a switching module (12),
- a DC distribution bus (3) included in a DC power path and
- a power electronic traction converter unit (13) for receiving AC power via one or more AC power paths which is configured to convert the received AC power to DC power which is applied to the DC distribution bus (3), wherein the switching module (12) comprising:
- an input terminal for receiving power from an external power supply;
- reconfiguration switches (24, 25) configured either to direct DC power of the external power supply received via the input terminal to the DC power path or to direct AC power of the external power supply received via the input terminal to a respective one of one or more AC power paths ; and
- an adaptation element (20) for providing AC and DC filtering of the power received via the input terminal,
wherein the switching module (12) feeds the DC power directly to the DC distribution bus (3) or to the power electronic traction converter unit 13 via an AC link (14) and
wherein the adaptation element (20) includes a plurality of chokes (31, 32, 34) each providing an inductivity, **characterized in that**, the input terminal is connected to an AC/DC choke (31) and an AC choke (32) in series, wherein a node between the AC/DC choke (31) and the AC choke (32) is connectable to the DC power path (3) via a respective one of the reconfiguration switches (24, 25).

2. Power distribution system according to claim 1, wherein the AC choke (32) is configured to be tapped depending on an AC input voltage level of the received power.

3. Power distribution system according to claim 1 or 2, wherein an autotransformer (33) is serially coupled to the AC/DC choke (31), wherein the autotransformer (33) is further configured to automatically transform at least two received AC power voltages into an AC voltage to be applied to the respective AC power path via a respective one of the reconfiguration switches (24, 25).

4. Power distribution system according to one of the claims 1 to 3, wherein a control choke (34) is provided in series for each of the one or more AC power paths.

5. Power distribution system according to one of the claims 1 to 4, wherein at least one of the AC/DC choke (31) and the AC choke (32) is provided as a split choke.

6. Power distribution system according to one of the claims 1 to 5, wherein at least one of the following components is included in the switching module (12) between the external power source and the input terminal:
- an earthing switch (41) coupled to the input terminal;
- a surge arrester (42) coupled to the input terminal;
- a circuit breaker (43) serially coupled to the input terminal; and
- a voltage and/or a current measurement units (44, 45) coupled to the input terminal;
wherein a pre-charging unit (46) is included in at least one of the DC or AC power paths.

7. Power distribution system according to one of the claims 1 to 6, wherein the switching module (12) is fully housed in a housing.

8. Power distribution system according to one of the claims 1 to 7, wherein the power electronic traction converter unit (13) comprising: a AC/AC converter system (131), a AC/DC converter system (132), a medium-frequency transformer device (133) and a AC/DC converter system (132),

9. Power distribution system according to claim 8, comprising:
a plurality of power electronic traction converter units (13) for selectively receiving AC power via a respective AC power path, wherein the switching module (12) is configured to select the AC power path and the power electronic traction converter unit (13) according to the voltage level of the external power supply.

10. Railbound vehicle (1) comprising a power distribution system according to one of the claims 1 to 9.

## Patentansprüche

1. Leistungsverteilungssystem für ein Schienenfahrzeug, das Folgendes umfasst:
- ein Schaltmodul (12),
- eine Gleichstromverteilungsschiene (3), die in einem Gleichstromleistungsweg enthalten ist, und
- eine leistungselektronische Antriebsumrichtereinheit (13) zum Empfangen von Wechselstrom über einen oder mehrere Wechselstromwege, die konfiguriert ist, um den empfangenen Wechselstrom in Gleichstrom umzuwandeln, der an die Gleichstromverteilungsschiene (3) angelegt wird, wobei das Schaltmodul (12) Folgendes umfasst:
- einen Eingangsanschluss zum Empfangen von Strom von einer externen Stromversorgung,
- Neukonfigurationsschalter (24, 25), die konfiguriert sind, um entweder Gleichstrom der externen Stromversorgung, der über den Eingangsanschluss empfangen wird, zu dem Gleichstromweg zu leiten, oder um Wechselstrom von der externen Stromversorgung, der über den Eingangsanschluss empfangen wird, zu einem jeweiligen des einen oder der mehreren Wechselstromwege zu lenken, und
- ein Anpassungselement (20), um Wechselstrom-und Gleichstromfilterung der über den Eingangsanschluss empfangenen Leistung zu filtern,
wobei das Schaltmodul (12) den Gleichstrom direkt zu der Gleichstromverteilungsschiene (3) oder zu der leistungselektronischen Antriebsumrichtereinheit (13) über eine Wechselstromverbindung (14) speist, und
wobei das Anpassungselement (20) eine Mehrzahl von Drosseln (31, 32, 34) aufweist, die jeweils eine Induktivität bereitstellen, **dadurch gekennzeichnet, dass** der Eingangsanschluss mit einer Wechselstrom-/Gleichstromdrossel (31) und einer Wechselstromdrossel (32) in Serie geschaltet ist,
wobei ein Knoten zwischen der Wechselstrom-/Gleichstromdrossel (31) und der Wechselstromdrossel (32) an den Gleichstromweg (3) über einen jeweiligen der Neukonfigurationsschalter (24, 25) anschließbar ist.

2. Leistungsverteilungssystem nach Anspruch 1, wobei die Wechselstromdrossel (32) konfiguriert ist, um in Abhängigkeit von einem Wechselstrom-Eingangsspannungspegel des empfangenen Stroms abgegriffen zu werden.

3. Leistungsverteilungssystem nach Anspruch 1 oder 2, wobei ein Autotransformator (33) in Serie mit der Wechselstrom-/Gleichstromdrossel (31) gekoppelt ist, wobei der Autotransformator (33) ferner konfiguriert ist, um automatisch mindestens zwei empfangene Wechselspannungen in eine Wechselspannung umzuwandeln, die an den jeweiligen Wechselstromweg über einen jeweiligen der Neukonfigurationsschalter (24, 25) anzulegen ist.

4. Leistungsverteilungssystem nach einem der Ansprüche 1 bis 4, wobei eine Steuerdrossel (34) für jeden des einen oder der mehreren Wechselstromwege in Serie vorgesehen ist.

5. Leistungsverteilungssystem nach einem der Ansprüche 1 bis 4, wobei die Wechselstrom-/Gleichstromdrossel (31) und/oder die Wechselstromdrossel (32) als eine geteilte Drossel bereitgestellt ist.

6. Leistungsverteilungssystem nach einem der Ansprüche 1 bis 5, wobei mindestens eines der folgenden Bauteile in dem Schaltmodul (12) zwischen der externen Stromversorgung und dem Eingangsanschluss enthalten ist:
- ein Erdungsschalter (41), der mit dem Eingangsanschluss gekoppelt ist,
- ein Ableiter (42), der mit dem Eingangsanschluss gekoppelt ist,
- ein Leistungsschalter (43), der mit dem Eingangsanschluss in Serie gekoppelt ist, und
- eine Spannungs- und/oder eine Strommesseinheit (44, 45), die mit dem Eingangsanschluss gekoppelt ist,
wobei eine Vorladeeinheit (46) in dem Gleichstrom-und/oder dem Wechselstromweg enthalten ist.

7. Leistungsverteilungssystem nach einem der Ansprüche 1 bis 6, wobei das Schaltmodul (12) vollständig in einem Gehäuse aufgenommen ist.

8. Leistungsverteilungssystem nach einem der Ansprüche 1 bis 7, wobei die leistungselektronische Antriebsumrichtereinheit (13) Folgendes umfasst:
ein Wechselstrom-/Wechselstromumwandlungssystem (131), ein Wechselstrom-Gleichstromumwandlungssystem (132), eine Mittelfrequenztransformatorvorrichtung (133) und ein Wechselstrom-/Gleichstromumwandlungssystem (132).

9. Leistungsverteilungssystem nach Anspruch 8, das Folgendes umfasst:
eine Vielzahl leistungselektronischer Antriebsumwandlungseinheiten (13) zum selektiven Empfangen von Wechselstrom über einen jeweiligen Wechselstromweg, wobei das Schaltmodul (12) konfiguriert ist, um den Wechselstromweg und die leistungselektronische Antriebsumwandlungseinheit (13) gemäß dem Spannungspegel der externen Stromversorgung auszuwählen.

10. Schienenfahrzeug (1), das ein Leistungsverteilungssystem nach einem der Ansprüche 1 bis 9 umfasst.

## Revendications

1. Système de distribution d'alimentation pour un véhicule sur rails, comprenant :
- un module de commutation (12),
- un bus de distribution c.c. (3) compris dans un chemin d'alimentation c.c., et
- une unité de conversion de puissance électronique (13) pour recevoir une alimentation c.a. par l'intermédiaire d'un ou plusieurs chemins d'alimentation c.a., qui est configurée pour convertir l'alimentation c.a. reçue en alimentation c.c. qui est appliquée au bus de distribution c.c. (3), dans lequel le module de commutation (12) comprend :
- une borne d'entrée pour recevoir une alimentation à partir d'un bloc d'alimentation externe ;
- des commutateurs de reconfiguration (24, 25) configurés soit pour diriger l'alimentation c.c. du bloc d'alimentation externe reçue par l'intermédiaire de la borne d'entrée vers le chemin d'alimentation c.c., soit pour diriger l'alimentation c.a. du bloc d'alimentation externe reçue par l'intermédiaire de la borne d'entrée vers un chemin respectif d'un ou plusieurs chemins d'alimentation c.a. ; et
- un élément d'adaptation (20) pour fournir un filtrage c.a. et c.c. de l'alimentation reçue par l'intermédiaire de la borne d'entrée,
dans lequel le module de commutation (12) fournit l'alimentation c.c. directement au bus de distribution c.c. (3) ou à l'unité de conversion de puissance électronique (13) par l'intermédiaire d'une liaison c.a. (14), et
dans lequel l'élément d'adaptation (20) comprend une pluralité de bobines d'arrêt (31, 32, 34) fournissant chacune une inductivité, **caractérisé en ce que** la borne d'entrée est reliée à une bobine d'arrêt c.a./c.c. (31) et à une bobine d'arrêt c.a. (32) en série, dans lequel un noeud entre la bobine d'arrêt c.a./c.c. (31) et la bobine d'arrêt c.a. (32) peut être relié au chemin d'alimentation c.c. (3) par l'intermédiaire d'un commutateur respectif des commutateurs de reconfiguration (24, 25).

2. Système de distribution d'alimentation selon la revendication 1, dans lequel la bobine d'arrêt c.a. (32) est configurée de manière à être prélevée en fonction d'un niveau de tension d'entrée en courant alternatif de l'alimentation reçue.

3. Système de distribution d'alimentation selon la revendication 1 ou 2, dans lequel un autotransformateur (33) est couplé en série à la bobine d'arrêt c.a./c.c. (31), dans lequel l'autotransformateur (33) est en outre configuré pour transformer automatiquement au moins deux tensions de courant alternatif reçues en une tension alternative destinée à être appliquée au chemin d'alimentation c.a. respectif par l'intermédiaire d'un commutateur respectif des commutateurs de reconfiguration (24, 25).

4. Système de distribution d'alimentation selon l'une quelconque des revendications 1 à 3, dans lequel une bobine de commande (34) est prévue en série pour chacun desdits un ou plusieurs chemins d'alimentation c.a..

5. Système de distribution d'alimentation selon l'une des revendications 1 à 4, dans lequel au moins l'une de la bobine d'arrêt c.a./c.c. (31) et de la bobine d'arrêt c.a. (32) est prévue en tant que bobine d'arrêt divisée.

6. Système de distribution d'alimentation selon l'une des revendications 1 à 5, dans lequel au moins l'un des composants suivants est inclus dans le module de commutation (12) entre la source d'alimentation externe et la borne d'entrée :
- un interrupteur de mise à la terre (41) couplé à la borne d'entrée ;
- un limiteur de surtension (42) couplé à la borne d'entrée ;
- un disjoncteur (43) couplé en série à la borne d'entrée ; et
- une unité de mesure de courant et/ou de tension (44, 45) couplée à la borne d'entrée ;
dans lequel une unité de précharge (46) est incluse dans au moins l'un des chemins d'alimentation c.c. ou c.a..

7. Système de distribution d'alimentation selon l'une des revendications 1 à 6, dans lequel le module de commutation (12) est entièrement logé dans un boîtier.

8. Système de distribution d'alimentation selon l'une des revendications 1 à 7, dans lequel l'unité de conversion de puissance électronique (13) comprend : un système de conversion c.a./c.a. (131), un système de conversion c.a./c.c. (132), un dispositif de transformation de moyennes fréquences (133) et un système de conversion c.a./c.c. (132).

9. Système de distribution d'alimentation selon la revendication 8, comprenant :
une pluralité d'unités de conversion de puissance électronique (13) pour recevoir de manière sélective une alimentation c.a. par l'intermédiaire d'un chemin d'alimentation c.a. respectif, dans lequel le module de commutation (12) est configuré pour sélectionner le chemin d'alimentation c.a. et l'unité de conversion de puissance électronique (13) en fonction du niveau de tension du bloc d'alimentation externe.

10. Véhicule sur rails (1) comprenant un système de distribution d'alimentation selon l'une quelconque des revendications 1 à 9.
